# EUROPEAN PATENT SPECIFICATION

(11) **EP 2 429 252 B1**
(45) Date of publication and mention of the grant of the patent: **04.05.2016**
(21) Application number: 09844272.6
(22) Date of filing: 27.07.2009
(51) Int. Cl.: H04W 74/00, H04W 74/08, H04W 84/04, H04B 7/26

(54) **METHOD OF RANDOM ACCESS AND BASE STATION**
VERFAHREN ZUM DIREKTZUGRIFF UND BASISSTATION
PROCÉDÉ D'ACCÈS ALÉATOIRE ET STATION DE BASE

(30) Priority: 05.05.2009 CN 200910137298
(43) Date of publication of application: 14.03.2012
(73) Proprietor: ZTE Corporation, Shenzhen, Guangdong 518057 (CN)
(72) Inventor: SHEN, Xiaoqin, Guangdong 518057 (CN); MA, Rui, Guangdong 518057 (CN); DU, Zhongda, Guangdong 518057 (CN)
(74) Representative: Dr. Weitzel & Partner
(86) International application number: PCT/CN2009/072936
(87) International publication number: WO 2010/127520

(56) References cited:
- WO-A1-2008/051037
- CN-A- 101 384 075
- US-A1- 2008 310 395
- CMCC: "Considerations on Relay related Procedures", 3GPP DRAFT; R2-092410 CONSIDERATIONS ON RELAY RELATED PROCEDURES IN RAN2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050340128, [retrieved on 2009-03-17]
- CCL/ITRI: "Random Access Transmission with Priority in E-UTRA Uplink", 3GPP DRAFT; R1-060140, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Helsinki, Finland; 20060123, 21 January 2006 (2006-01-21), XP050417569, [retrieved on 2006-01-21]
- FUJITSU: "Random access preamble from UE in handover", 3GPP DRAFT; R1-070970, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070206, 6 February 2007 (2007-02-06), XP050104975, [retrieved on 2007-02-06]

## Description

### Field of the Invention

The present invention relates to the communication field, in particular to a random access method and a base station.

### Background of the Invention

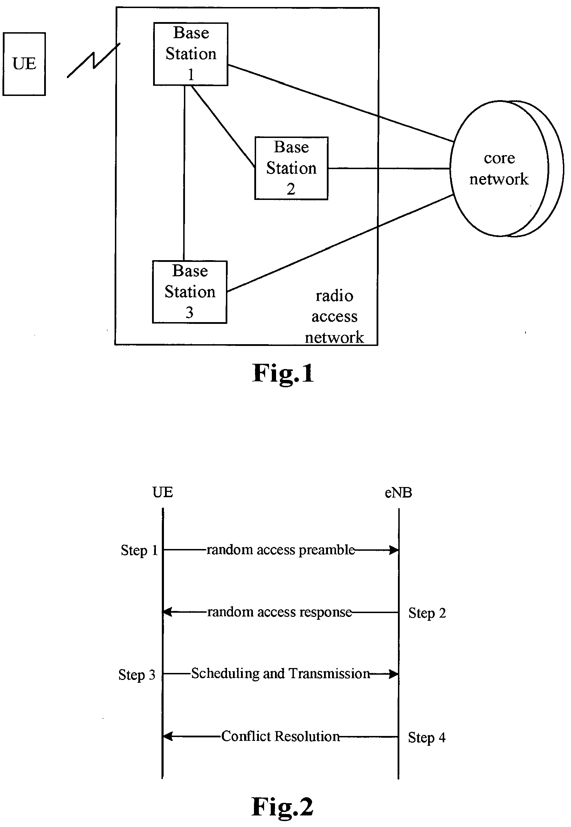

A cellular wireless communication system mainly consists of a user equipment (UE for short), a base station and a core network. Fig. 1 is a schematic diagram of a cellular wireless communication system in related art. As shown in Fig. 1, a radio access network (RAN for short) is a network constituted by base stations and responsible for the access layer affairs such as management of radio resources. There may exist a physical or logical connection between the base stations according to practical situations, for example in Fig. 1, base station 1 and base station 2 are connected, or base station 1 and base station 3 are connected. Each base station can be connected with one or more core network (CN for short) nodes. The core network is responsible for the non-access layer affairs such as location update and so on, and is an anchor point of a user plane. The UE refers to various types of equipment such as mobile phone or notebook computer which can communicate with the cellular wireless communication network.

In the cellular wireless communication system, there are mainly five events which will trigger a UE to randomly access a base station: 1. initial access of the UE from an IDLE mode; 2. connection re-establishment in an RRC mode; 3. handover; 4. downlink (DL for short) data arrival in an RRC_CONNECTED mode; and 5. uplink (UL for short) data arrival in an RRC_CONNECTED mode. Based on the five application scenarios above, the random access may be classified into two types: contention-based random access and non-contention-based random access. The contention-based random access can be applied in the five scenarios above, but the non-contention-based random access can only be applied in two scenarios, i.e. handover and DL data arrival in the RRC_CONNECTED mode.

Fig. 2 is a signaling flow chart of a contention-based random access procedure in related art. As shown in Fig. 2, the contention-based random access flow includes the following processes:
step 1, a UE sends a random access preamble (RAP for short) to an eNB via a physical random access channel (PRACH for short) in an UpLink (UL for short);
step 2, the eNB generates a random access response (RAR for short) via an MAC on a DL-SCH and sends the RAR to the UE;
step 3, the UE performs scheduling and transmission on a UL-SCH; and
step 4, the eNB performs conflict resolution on the DL-SCH.

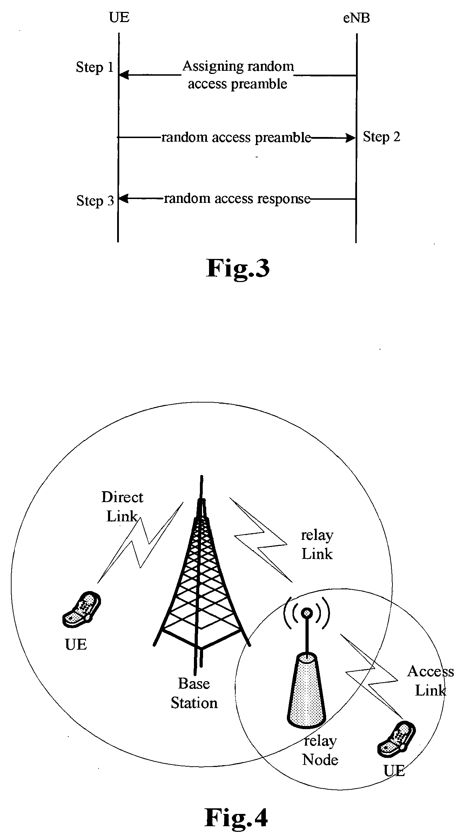

Fig. 3 is a signaling flow chart of a non-contention-based random access in related art. As shown in Fig. 3, the non-contention-based random access flow includes the following processes:
step 1, an eNB assigns an RAP to a UE via a dedicated signaling in a DL;
step 2, the UE sends the RAP to the eNB via a PRACH in a UL; and
step 3, the eNB generates an RAR via an MAC on a DL-SCH, and sends the RAR to the UE.

It can be concluded from the descriptions of Fig. 2 and Fig. 3 that the difference between the contention-based random access and the non-contention-based random access lies in that the RAP of the former is selected by the UE itself, and accordingly a situation that many UEs simultaneously choose the same RAP may take place and the UEs need to compete for the RAP to access the base station, but the RAP of the latter is designated by the base station to the UE and the UE does not need to compete for the RAP to access the base station.

In the related art, in order to improve the coverage rate of data rate, group mobility, temporary network deployment, throughput of cell border area and coverage of a new area, a relay is introduced to Long Term Evolution Advanced (LTE-Advanced for short).

Relay, also called as relay node/relay station (RN/RS for short), is a site capable of relaying data between other sites and having certain function of information control. Fig. 4 is a schematic diagram of the network architecture after the relay is introduced to the related art. The working principle of the network architecture is as shown in Fig. 4, wherein the UE which is directly served by the eNB is called as macro UE, and the UE which is served by the relay is called as relay UE.

In a relay system, a Direct Link is a wireless link between the eNB and the UE and includes DL/UL direct link; an Access Link is a link between the RN and the UE and includes DL/UL access link; and a relay Link is a wireless link between the eNB and the RN and includes DL/UL relay link.

Two types of random accesses, i.e. random access of the relay UE and random access of the relay itself, will be added after introduction of the relay. Particularly, there are mainly the following scenarios in which the relay randomly accesses the eNB: 1. in power-up initialization of the relay; 2. during failure of the relay Link; and 3. relay handover. In the three scenarios above, the relay may be regarded as a UE when the relay randomly accesses the eNB. However, if the eNB considers the relay should compete together with other macro UEs to access the network, it may result in failed access of the relay to the network for several times, and lead to the situation that the relay UE cannot access the network for a long time.

Document CMCC: "Considerations on Relay related Procedures", 3GPP DRAFT; R2-092410 CONSIDERATIONS ON RELAY RELATED PROCEDURES IN RAN2, SOPHIA-ANTIPOLIS CEDEX; FRANCE, no. Seoul, Korea; 20090317, 17 March 2009 (2009-03-17), XP050340128 discusses RAN2 related procedures for mobile, nomadic and fixed relay.

Document CCL/ITRI: "Random Access Transmission with Priority in E-UTRA Uplink", 3GPP DRAFT; R1-060140, SOPHIA-ANTIPOLIS CEDEX; FRANCE, vol. RAN WG1, no. Helsinki, Finland; 20060123, 21 January 2006 (2006-01-21), XP050417569 presents a priority concept in random access transmission to enhance access request according to varied time budgets.

### Summary of the Invention

The present invention is made upon considering the problem in the related art that a network access of a relay fails for several times when the relay competes with other macro UEs for entering the network during its random access to a base station. Therefore, the main object of the present invention is to provide a random access method and a base station so as to solve the above problem in the related art.

In order to achieve the above object, a random access method for random access of a relay is provided according to one aspect of the present invention.

The random access method according to the present invention comprises: a base station assigning a relay-dedicated random access preamble to the relay, wherein the relay-dedicated random access preamble indicates an access priority of the relay to be higher than that of an ordinary user equipment; and the base station receiving a random access preamble sent from the ordinary user equipment and the relay-dedicated random access preamble sent from the relay, and the base station performing, when determining the relay-dedicated random access preamble is received, a non-contention-based random access preferentially for the relay.

Preferably, prior to the step of the base station assigning the relay-dedicated random access preamble to the relay via a dedicated channel, the method further comprises: the base station dividing non-contention-based dedicated random access preambles to obtain a portion of the non-contention-based dedicated random access preambles to be used as relay-dedicated random access preambles.

Preferably, after the base station determining a random access preamble code received is the relay-dedicated random access preamble, the method further comprises: the base station setting the access priority of the relay to be a high level.

Preferably, prior to the step of the base station receiving the relay-dedicated random access preamble sent from the relay, the method further comprises: the relay sending the relay-dedicated random access preamble on a predetermined random access time slot of a radio frame.

In order to achieve the above object, a random access method for random access of a relay is provided according to one aspect of the present invention.

The random access method according to the present invention comprises: a transmission power threshold is set in advance prior to a random access initialization, wherein the transmission power threshold is configured to determine whether a random access preamble received by a base station is a random access preamble sent from a relay, and after the random access initialization, the base station receiving a random access preamble and a random access preamble transmission power parameter sent from the relay on a predetermined random access time slot of a radio frame; and the base station determining whether the random access preamble received is the random access preamble sent from the relay according to the received random access preamble transmission power parameter and the transmission power threshold, if yes, performing a non-contention-based random access preferentially for the relay.

Preferably, a process of the base station determining the random access preamble received is the random access preamble sent from the relay comprises: the base station, when determining the random access preamble transmission power parameter is bigger than the transmission power threshold, determining that the random access preamble received is the random access preamble sent from the relay.

Preferably, after the base station determining the random access preamble code received is the random access preamble sent from the relay, the method further comprises: the base station setting an access priority of the relay to be a high level.

In order to achieve the above object, a base station is provided according to another aspect of the present invention.

The base station according to the present invention comprises: a sending module, configured to assign a relay-dedicated random access preamble to a relay, wherein the relay-dedicated random access preamble indicates an access priority of the relay to be higher than that of an ordinary user equipment; a receiving module, configured to receive the relay-dedicated random access preamble sent from the relay and a random access preamble sent from the ordinary user equipment; a determining module, configured to determine whether the receiving module receives the relay-dedicated random access preamble; and a random access module, configured to perform, in a situation that the determining module determines the receiving module receives the relay-dedicated random access preamble, a non-contention-based random access preferentially for the relay.

Preferably, the base station further comprises a dividing module, configured to divide non-contention-based dedicated random access preambles to obtain a portion of the non-contention-based dedicated random access preambles to be used as relay-dedicated random access preambles.

In order to achieve the above object, a base station is provided according to another aspect of the present invention.

The base station according to the present invention comprises: a setting module, configured to set a transmission power threshold in advance, wherein the transmission power threshold is configured to determine whether a random access preamble received by the base station is a random access preamble sent from a relay; a receiving module, configured to receive a random access preamble and a random access preamble transmission power parameter sent from the relay on a predetermined random access time slot of a radio frame; a determining module, configured to determine whether the random access preamble received is the random access preamble sent from the relay according to the random access preamble transmission power parameter received and the transmission power threshold; and a random access module, configured to perform, in a situation that the determining module determines the random access preamble received is the random access preamble sent from the relay, a non-contention-based random access preferentially for the relay.

Preferably, the determining module is configured to, in a situation that the random access preamble transmission power is determined to be bigger than the transmission power threshold, determine that the random access preamble received is the random access preamble sent from the relay.

In virtue of the technical solutions in the present invention, a relay is enabled to preferentially access a base station by assigning a dedicated random access preamble for the relay or setting a transmission power threshold for the relay, the problem in the related art that a network access of the relay fails for several times when the relay competes with other macro UEs for accessing the network during its random access to the base station is solved, the time taken by random access of the relay can be saved, and the success ratio of random access of the relay to the network is increased.

Other features and advantages of the present invention will be illustrated in following Description, and partially become obvious in the Description or understood by carrying out the present invention. The object of the present invention and other advantages can be accomplished and obtained through the structures specified in the Description, Claims and accompanying drawings.

### Brief Description of the Drawings

The drawings provide a further understanding of the present invention, form a part of the Description, and illustrate the present invention together the embodiments in the present invention without limiting the present invention. In the drawings:
Fig. 1 is a schematic diagram of a cellular wireless communication system in the related art;
Fig. 2 is a signaling flow chart of a contention-based random access procedure in the related art;
Fig. 3 is a signaling flow chart of a non-contention-based random access in the related art;
Fig. 4 is a schematic diagram of a network architecture after a relay is introduced to the related art;
Fig. 5 is a flow chart of a random access method according to method embodiment 1 of the present invention;
Fig. 6 is a schematic diagram of RAP classification according to the method embodiment 1 of the present invention;
Fig. 7 is a flow chart of a random access method according to method embodiment 2 of the present invention;
Fig. 8 is a block diagram of a base station in apparatus embodiment 1 according to the present invention; and
Fig. 9 is a block diagram of a base station in apparatus embodiment 2 according to the present invention.

### Detailed Description of Embodiments

### Function Overview

In order to avoid the problem that a relay may fail when it competes with other macro UEs for random access to a network, it is provided in the embodiments of the present invention a random access method and a base station. In the technical solutions of the present invention, during random access of a relay to a network, the access priority of the relay to the network can be set to be higher than that of an ordinary macro UE, specifically including two solutions as follows.

Solution 1: step 1, a base station assigns a designated RAP to a relay via a dedicated channel; prior to the process in step 1, a portion needs to be divided from dedicated random access preambles as relay-dedicated random access preambles; step 2, the relay sends the random access preamble to the base station on a certain random access time slot of a radio frame; and step 3, the base station determines, according to a random access preamble identifier received, the random access preamble to be a relay-dedicated random access preamble, and then determines a random access priority of the relay to be higher than that of an ordinary UE and processes according to a non-contention random access procedure.

Solution 2: step 1, a threshold is set prior to a random access initialization, and the random access initialization is performed; step 2, a relay sends a random access preamble and a random access preamble transmission power parameter, etc. to a base station on a certain random access time slot of a radio frame; and step 3, the base station receives the random access preamble sent from the relay, compares the received random access preamble transmission power parameter with the threshold set before the initialization, determines a random access priority of the relay to be higher than that of an ordinary UE, and processes according to a non-contention random access procedure.

Next, preferred embodiments of the present invention will be illustrated in detail in conjunction with the accompanying drawings. It should be understood that the preferred embodiments described herein merely illustrate but not limit the present invention.

For the sake of illustration, specific details are described in the following descriptions for providing a thorough understanding to the present invention. It is apparent, however, that the present invention also can be carried out without these specific details. In addition, the embodiments below and details therein may be combined without departing from the scope of the claims attached.

### Method Embodiment 1

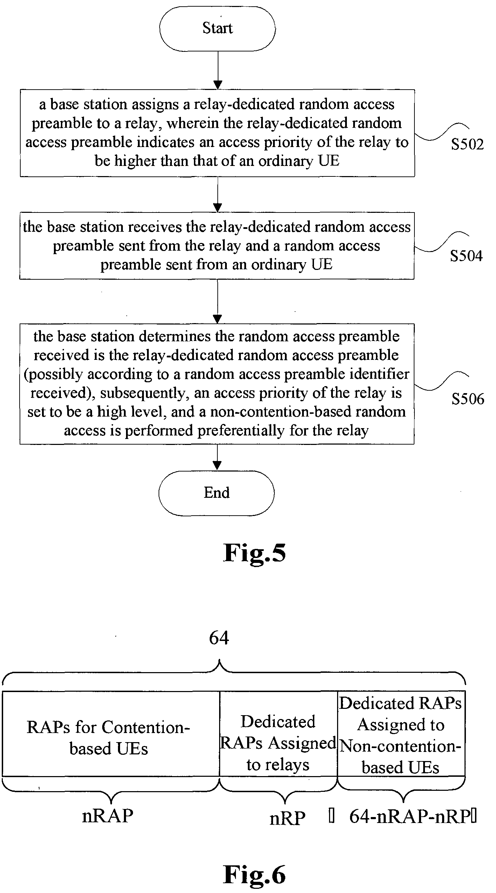

A random access method which is used for random access of a relay is provided according to one embodiment of the present invention. Fig. 5 is a flow chart of a random access method according to method embodiment 1 of the present invention. As shown in Fig. 5, the following processes (step S502-step S506) are included.

Step S502: a base station assigns a relay-dedicated random access preamble to a relay via a dedicated channel, wherein the relay-dedicated random access preamble indicates an access priority of the relay to be higher than that of an ordinary UE.

Prior to performing step S502, the base station firstly needs to divide from non-contention-based dedicated random access preambles a portion of which to use the portion as relay-dedicated random access preambles.

Step S504: the base station receives a relay-dedicated random access preamble sent from a relay on a predetermined random access time slot of a radio frame and a random access preamble sent from an ordinary UE.

Step S506: the base station can set, when determining the relay-dedicated random access preamble is received (possibly according to a random access preamble identifier received), an access priority of the relay to be a high level, and performs a non-contention-based random access preferentially for the relay.

Specifically, the step of the base station performing the non-contention-based random access for the relay includes the following processes: 1. the base station sending a random access response message to the relay; 2. completing the random access if the relay confirms correct receipt of the random access response message; and 3. re-sending the relay-dedicated random access preamble if the relay confirms incorrect receipt of the random access response message.

The technical solutions of the present invention will be described in detail in conjunction with the accompanying drawings. A process of random access of a relay to a wireless communication system includes the steps as follows.

Step 1: a base station assigns a designated RAP to the relay via a dedicated channel.

Specifically, there are 64 RAPs in total, wherein number Of RA-Preambles (nRAP for short) RAPs in total are used for contention and numbered from 0 to nRAP-1. These RAPs are broadcasted by an eNB in a broadcasting message to all UEs in a cell, and one RAP may be selected therefrom to be sent to the base station when a UE initiates a contention-based random access. In the above case, a situation that several UEs simultaneously select the same RAP may occur so that a conflict may take place; therefore the UEs should compete for accessing the network.

There are (64-nRAP) RAPs in total, which are numbered from nRAP to 63, for non-contention. These RAPs will not be broadcasted by the eNB in the broadcasting message to all UEs in the cell, but are sent only to a certain UE via a dedicated channel, thus contention is not required.

In the embodiment of the present invention, preferably, a portion of RAPs can be selected from the (64-nRAP) dedicated RAPs to be used as relay-dedicated RAPs, and the number of the relay-dedicated RAPs is set as number Of Relay-Preambles (nRP for short).

As shown in Fig. 6, the 64 RAPs are divided into three portions: nRAP RAPs are used for contention-based UEs and numbered from 0 to nRAP-1; nRP RAPs are dedicated to relays and numbered from nRAP to nRAP+nRP-1; and 64-nRAP-nRP RAPs are dedicated to non-contention-based UEs and numbered from nRAP+nRAP to 63.

Step 2: the relay sends a random access preamble to the base station on a certain random access time slot of a radio frame.

Specifically, an L2 (MAC layer, RLC layer, PDCP layer)/L3 (RRC layer) of the relay indicates an L1 (PHY layer) to send the dedicated RAP assigned by the base station, corresponding radio network temporary identifier (RA-RNTI) and preamble index, etc. via a selected physical random access channel resource (PRACH).

Step 3: the base station sends a random access response message to the relay via a MAC PDU on a DL-SCH.

Specifically, the base station, upon receiving the RAP and preamble code index sent from the relay, determines this preamble code is dedicatedly assigned by the base station to the relay, and sets an access priority of the relay to be a high level, i.e. the relay does not need to compete for accessing the network.

The base station configures the random access response message, and sends the random access response message to the relay. The random access response message includes an uplink radio resource (UL-grant) assigned for the above relay and an individual identifier (RAPID) corresponding to the random access preamble message. A random access radio network temporary identifier (RA-RNTI) is included on a physical control channel. It should be indicated that the RAPID is included in an MAC E/T/RAPID subheader, and each MAC E/T/RAPID subheader is corresponding to one MAC RAR.

Step 4: the relay receives the random access response message in a response receiving window, and determines, upon comparing the RA-RNTI and RAPID included in local and the received random access response message, whether the two identifiers are expected values.

Specifically, if the RA-RNTI (on PDCCH) carried in the random access response message received by the relay is corresponding to the RA-RNTI (on PRACH) of the random access resource of the random access preamble sent from the relay, and the random access preamble identifier RAPID (in PDU of the MAC layer) in the random access response message matches a random access preamble index (RPI) sent from the relay, then the relay receives a correct random access response message, and reads contents of the MAC RAR corresponding to the subheader including the RAPID.

Subsequently, the UE processes a Timing Advance command and a UL grant value in the MAC RAR, neglects a Temporary C-RNTI in the MAC RAR, indicates a physical layer, and considers the random access having been completed. If the relay fails to receive the correct random access response message, an RAP can be re-sent to determine to re-initiate the next possible random access.

Through the above processes, the time taken by random access of a relay to a network may be saved, and the success probability of the random access of the relay to the network is increased.

### Method Embodiment 2

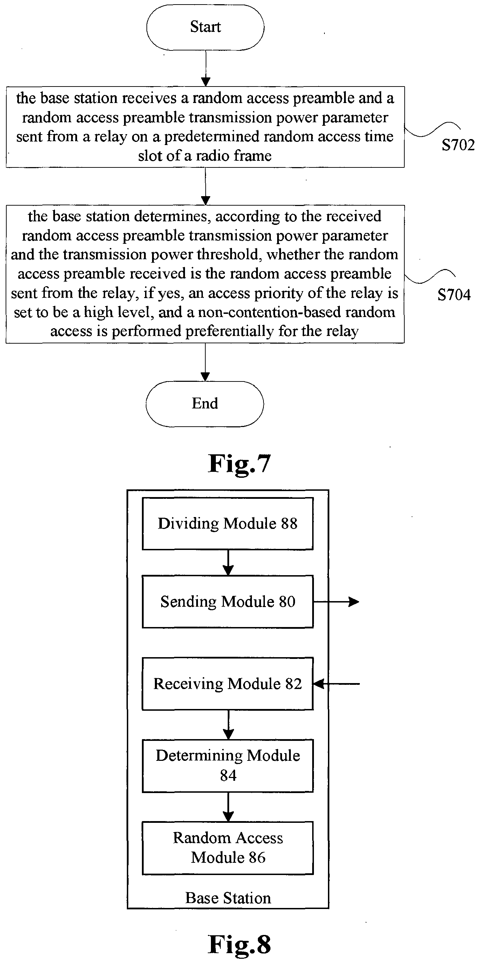

A random access method which is used for random access of a relay is provided according to one embodiment of the present invention. As a relay transmission power is far bigger than that of an ordinary macro UE, in order to distinguish whether an RAP received by a base station is from a relay or from a macro UE, in a technical solution of an embodiment in the present invention, the following processes firstly need to be performed: a threshold (i.e. a transmission power threshold) can be set prior to a random access initialization, wherein this threshold is between an RAP transmission power of an ordinary macro UE and an RAP transmission power of a relay, thus, a random access preamble received by a base station can be determined whether it is a random access preamble sent from a relay by using the set transmission power threshold. The random access initialization may be performed after the transmission power threshold is set. Fig. 7 is a flow chart of a random access method according to the method embodiment 2 of the present invention. As shown in Fig. 7, after performing the random access initialization, the following processes (steps S702-step S704) are included.

Step S702: the base station receives a random access preamble and a random access preamble transmission power parameter sent from the relay on a predetermined random access time slot of a radio frame.

Step S704: the base station determines, according to the received random access preamble transmission power parameter and the transmission power threshold, whether the random access preamble received is the random access preamble sent from the relay, if yes, an access priority of the relay is set to be a high level, and a non-contention-based random access is performed preferentially for the relay.

Specifically, in the step S704, if the base station determines that the random access preamble transmission power parameter is bigger than the transmission power threshold, it can be determined that the received random access preamble is the random access preamble sent from the relay.

The above technical solution in the present invention will be described in detail hereinafter. A process of random access of a relay to a wireless communication system includes the steps as follows.

Step 1: prior to random access of a UE to a base station, a random access initialization can be performed by a PDCCH or UE MAC mainly for the purpose of identifying RAPs and PRACH resources.

In the embodiments of the present invention, preferably, as a relay transmission power is far bigger than that of an ordinary macro UE, in order to distinguish whether an RAP received by the base station is from a relay or from a macro UE, a threshold (a transmission power threshold, i.e. the threshold of PREAMBLE_RECEIVED_TARGET_POWER) can be set prior to the random access initialization. The threshold is between an RAP transmission power of an ordinary macro UE and an RAP transmission power of a relay.

Step 2: the relay sends a random access preamble to the base station on a certain random access time slot of a radio frame.

Specifically, an L2 (MAC layer, RLC layer, PDCP layer)/L3 (RRC layer) of the relay indicates an L1 (PHY layer) to send an RAP, corresponding RA-RNTI, preamble index, and RAP transmission power parameter (PREAMBLE _RECEIVED_TARGET_POWER) etc. via a selected physical random access channel resource (PRACH).

In the above, a computation formula of the RAP transmission power is as follows:
PREAMBLE_RECEIVED_TARGET_POWER=PREAMBLE_INITIAL _RECEIVED_TARGET_POWER+DELTA_PREAMBLE+(PREAMBLE_TR ANSMISSION_COUNTER-1)*POWER_RAMP_STEP.

The PREAMBLE_INITIAL_RECEIVED_TARGET_POWER is an initial RAP transmission power, the DELTA_PREAMBLE is variance between different preamble code formats, the BLE_TRANSMISSION_COUNTER is the number of RAPs having been sent, and the POWER_RAMP_STEP is a power affection slope.

There are 64 RAPs in total, wherein number Of RA-Preambles (nRAP for short) RAPs in total are used for contention and numbered from 0 to nRAP-1, and (64-nRAP) RAPs in total are used for non-contention and numbered from nRAP to 63. The RAP sent from a relay to the base station may be designated by the base station to the relay via a dedicated channel, in this case the RAP can be numbered from nRAP to 63; and the RAP may also be selected by the relay itself from a range of optional RAPs broadcasted in a broadcasting channel by the base station to all UEs in a cell, in this case the RAP can be numbered from 0 to nRAP-1.

Step 3: the base station sends a random access response message to the relay via an MAC PDU on a DL-SCH.

Specifically, the base station receives the RAP, preamble code index and RAP transmission power parameter (PREAMBLE_RECEIVED_TARGET_POWER) sent from the relay, and compares the PREAMBLE_RECEIVED_TARGET_POWER with the threshold (the threshold of PREAMBLE_RECEIVED_TARGET_POWER).

If the base station determines that the PREAMBLE_RECEIVED_TARGET_POWE is smaller than or equal to the threshold of PREAMBLE RECEIVED_TARGET_POWER, the base station processes according to a processing procedure of random access of an ordinary UE; and if the base station determines the PREAMBLE_RECEIVED_TARGET_POWE is bigger than the threshold of PREAMBLE_RECEIVED_TARGET_POWER, the base station can determine that the RAP is sent from the relay, then the random access priority will be set to be a high level, and this relay will be allowed to perform a non-contention-based random access no matter the RAP is dedicatedly assigned or not.

Step 4: after receiving the random access response message in a response receiving window, the relay determines, upon comparing RA-RNTI and RAPID included in a received random access response message and in local, whether the two identifiers are expected values.

Specifically, if the RA-RNTI (on PDCCH) of the random access response message received by the relay is corresponding to the RA-RNTI (on PRACH) of the random access resource of the random access preamble sent from the relay, and the random access preamble identifier RAPID (in PDU of the MAC layer) carried in the random access response message matches a random access preamble index (RPI) sent from the relay, the relay receives a correct random access response message, and reads contents of the MAC RAR corresponding to the subheader including the RAPID.

The UE processes a Timing Advance command and a UL grant value in the MAC RAR, neglects a Temporary C-RNTI value therein, indicates a physical layer, and considers the random access having been completed. If the relay fails to receive the correct random access response message, an RAP can be re-sent to determine to re-initiate the next possible random access.

Through the above processes, the time taken by random access of a relay to a network may be saved, and the success probability of the random access of the relay to the network is increased.

According to an embodiment of the present invention, a computer readable medium is also provided. The computer readable medium stores therein instructions that can be executed by a computer. When the instructions are executed by a computer or a processor, the computer or processor is enabled to execute the processes as shown in the steps in Fig. 5 and Fig. 7. Preferably, one or more of embodiment 1 and embodiment 2 can be executed.

### Apparatus Embodiment 1

A base station is provided according to an embodiment of the present invention. Fig. 8 is a block diagram of a base station in apparatus embodiment 1 according to the present invention. As shown in Fig. 8, the base station according to one embodiment of the present invention comprises a sending module 80, a receiving module 82, a determining module 84, a random access module 86 and a dividing module 88. The modules in the embodiment of the present invention will be described in detail hereinafter.

Specifically, the dividing module 88 firstly divides a portion from non-contention-based dedicated random access preambles to be used as relay-dedicated random access preambles. The relay-dedicated random access preamble indicates an access priority of a relay to be higher than that of other UEs.

There are 64 RAPs in total, wherein number Of RA-Preambles (nRAP for short) RAPs in total are used for contention and numbered from 0 to nRAP-1. These RAPs are broadcasted by an eNB in a broadcasting message to all UEs in a cell, and one RAP may be selected therefrom to be sent to the base station when a UE initiates a contention-based random access. In the above case, a situation that several UEs simultaneously select the same RAP may occur so that a conflict may take place; therefore the UEs should compete for accessing the network.

There are (64-nRAP) RAPs in total, which are numbered from nRAP to 63, for non-contention. These RAPs will not be broadcasted by the eNB in the broadcasting message to all UEs in the cell, but are sent only to a certain UE via a dedicated channel, thus contention is not required for accessing the network.

Preferably in the embodiment of the present invention, the dividing module 88 can select a portion of RAPs from the (64-nRAP) dedicated RAPs to be used as relay-dedicated RAPs, and the number of the relay-dedicated RAPs is set as number Of Relay-Preambles (nRP for short).

After the above processes, the sending module 80 can assign a relay-dedicated random access preamble to the relay via a dedicated channel, subsequently, the receiving module 82 can receive the relay-dedicated random access preamble sent from the relay on a predetermined random access time slot of a radio frame and a random access preamble sent from an ordinary UE; after the receiving module 82 receives the relay-dedicated random access preamble and the random access preamble sent from the ordinary UE, the determining module 84 needs to determine whether the received random access preamble code is the relay-dedicated random access preamble; and in a situation that the determining module 84 determines the received random access preamble code is the relay-dedicated random access preamble, the random access module 86 performs a non-contention-based random access preferentially for the relay.

It should be indicated that the modules above may be changed and combined without departing from the scope of the claims attached.

### Apparatus Embodiment 2

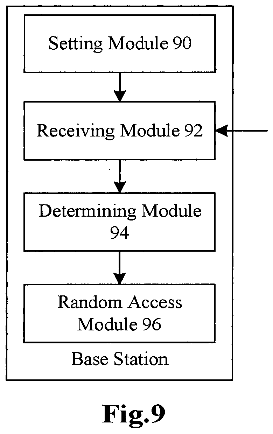

A base station is provided according to one embodiment of the present invention. Fig. 9 is a block diagram of a base station in apparatus embodiment 2 according to the present invention. As shown in Fig. 9, a base station according to one embodiment of the present invention comprises a setting module 90, a receiving module 92, a determining module 94 and a random access module 96. The above technical solution of the embodiment in the present invention will be described in detailed hereinafter.

Specifically, as a relay transmission power is far bigger than that of an ordinary macro UE, in order to distinguish whether an RAP received by a base station is from a relay or from a macro UE, the setting module 90 can set a threshold (a transmission power threshold, i.e. the threshold of PREAMBLE RECEIVED_TARGET_POWER) prior to a random access initialization. This threshold is between an RAP transmission power of an ordinary macro UE and an RAP transmission power of a relay, and is used for the base station to determine whether a random access preamble received is a random access preamble sent from a relay.

Particularly, a computation formula of the RAP transmission power is as follows:
PREAMBLE RECEIVED_TARGET_POWER=PREAMBLE_INITIAL _RECEIVED_TARGET_POWER+DELTA_PREAMBLE+(PREAMBLE_TR ANSMISSION_COUNTER-1)*POWER_RAMP_STEP.

The PREAMBLE INITIAL_RECEIVED_TARGET_POWER is an initial RAP transmission power, the DELTA_PREAMBLE is variance between different preamble code formats, the BLE_TRANSMISSION_COUNTER is the number of RAPs having been sent, and the POWER_RAMP_STEP is a power affection slope.

The receiving module 92 is configured to receive the RAP, preamble code index and RAP transmission power parameter (PREAMBLE_RECEIVED_TARGET_POWER) sent from the relay.

Specifically, there are 64 RAPs in total, wherein number Of RA-Preambles (nRAP for short) RAPs in total are used for contention and numbered from 0 to nRAP-1, and (64-nRAP) RAPs in total are used for non-contention and numbered from nRAP to 63. The RAP received by the receiving module 92 may be designated by the base station to the relay via a dedicated channel, in this case the RAP can be numbered from nRAP to 63; and the RAP may also be selected by the relay itself from a range of optional RAPs broadcasted in a broadcasting channel by the base station to all UEs in a cell, in this case the RAP can be numbered from 0 to nRAP-1.

The determining module 94 is configured to determine whether the received random access preamble is the random access preamble sent from the relay according to the received random access preamble transmission power parameter and the transmission power threshold.

Specifically, if the determining module 94 determines that the PREAMBLE_RECEIVED_TARGET_POWE is smaller than or equal to the threshold of PREAMBLE RECEIVED_TARGET_POWER, it means that a process according to a processing procedure of random access of an ordinary UE can be performed; and if the determining module 94 determines the PREAMBLE_RECEIVED_TARGET_POWE is bigger than the threshold of PREAMBLE_RECEIVED_TARGET_POWER, it means that that the RAP can be determined to be sent from the relay.

The random access module 96 is configured to set a random access priority to be a high level in a situation when the determining module 94 determines the received random access preamble is the random access preamble sent from the relay, and perform a non-contention-based random access preferentially for the relay.

To sum up, in virtue of the technical solutions in the present invention, a relay is enabled to preferentially access a base station by assigning a dedicated random access preamble for the relay or setting a transmission power threshold for the relay, the problem in the related art that a network access of the relay is failed for several times when the relay competes with other macro UEs for accessing the network during its random access to the base station is solved, the time taken by random access of the relay can be saved, and the success ratio of random access of the relay to the network is increased.

In addition, the present invention is carried out without modifying the system architecture or current processing flow, is easy to be accomplished and popularized in the technical field, and thus has strong industry applicability.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The above mentioned are merely the preferred embodiments of the present invention but not to limit the present invention. Various alterations and changes to the present invention are apparent to those skilled in the art. Any modifications, equivalent substitutions, improvements etc. within the principle of the present invention should be concluded in the protection scope of the present invention.

## Claims

1. A random access method in a cellular wireless communication system for random access of a relay, **characterized in that** the method comprises:
a base station assigning a relay-dedicated random access preamble to the relay, wherein the relay-dedicated random access preamble indicates an access priority of the relay to be higher than that of an ordinary user equipment (S502); and
the base station receiving a random access preamble sent from the ordinary user equipment and the relay-dedicated random access preamble sent from the relay (S504), and the base station performing, when determining the relay-dedicated random access preamble is received, a non-contention-based random access preferentially for the relay (S506).

2. The method according to claim 1, **characterized in that** prior to the step of the base station assigning the relay-dedicated random access preamble to the relay via a dedicated channel, the method further comprises:
the base station dividing non-contention-based dedicated random access preambles to obtain a portion of the non-contention-based dedicated random access preambles to be used as relay-dedicated random access preambles.

3. The method according to claim 2, **characterized in that** after the base station determining a random access preamble code received is the relay-dedicated random access preamble, the method further comprises:
the base station setting the access priority of the relay to be a high level.

4. The method according to claim 1, **characterized in that** prior to the step of the base station receiving the relay-dedicated random access preamble sent from the relay, the method further comprises:
the relay sending the relay-dedicated random access preamble on a predetermined random access time slot of a radio frame.

5. A random access method in a cellular wireless communication system for random access of a relay, **characterized in that** a transmission power threshold is set in advance prior to a random access initialization, wherein the transmission power threshold is configured to determine whether a random access preamble received by a base station is a random access preamble sent from a relay, and after the random access initialization, the method further comprises:
the base station receiving a random access preamble and a random access preamble transmission power parameter sent from the relay on a predetermined random access time slot of a radio frame (S702); and
the base station determining whether the random access preamble received is the random access preamble sent from the relay according to the received random access preamble transmission power parameter and the transmission power threshold, if yes, performing a non-contention-based random access preferentially for the relay (S704).

6. The method according to claim 5, **characterized in that** a process of the base station determining the random access preamble received is the random access preamble sent from the relay comprises:
the base station, when determining the random access preamble transmission power parameter is bigger than the transmission power threshold, determining that the random access preamble received is the random access preamble sent from the relay.

7. The method according to claim 6, **characterized in that** after the base station determining the random access preamble code received is the random access preamble sent from the relay, the method further comprises:
the base station setting an access priority of the relay to be a high level.

8. A base station in a cellular wireless communication system, **characterized by** comprising:
a sending module (80), configured to assign a relay-dedicated random access preamble to a relay, wherein the relay-dedicated random access preamble indicates an access priority of the relay to be higher than that of an ordinary user equipment;
a receiving module (82), configured to receive the relay-dedicated random access preamble sent from the relay and a random access preamble sent from the ordinary user equipment;
a determining module (84), configured to determine whether the receiving module receives the relay-dedicated random access preamble; and
a random access module (86), configured to perform, in a situation that the determining module determines the receiving module receives the relay-dedicated random access preamble, a non-contention-based random access preferentially for the relay.

9. The base station according to claim 8, **characterized in that** the base station further comprises:
a dividing module (88), configured to divide non-contention-based dedicated random access preambles to obtain a portion of the non-contention-based dedicated random access preambles to be used as relay-dedicated random access preambles.

10. A base station in a cellular wireless communication system, **characterized by** comprising:
a setting module (90), configured to set a transmission power threshold in advance, wherein the transmission power threshold is configured to determine whether a random access preamble received by the base station is a random access preamble sent from a relay;
a receiving module (92), configured to receive a random access preamble and a random access preamble transmission power parameter sent from the relay on a predetermined random access time slot of a radio frame;
a determining module (94), configured to determine whether the random access preamble received is the random access preamble sent from the relay according to the random access preamble transmission power parameter received and the transmission power threshold; and
a random access module (96), configured to perform, in a situation that the determining module determines the random access preamble received is the random access preamble sent from the relay, a non-contention-based random access preferentially for the relay.

11. The base station according to claim 10, **characterized in that** the determining module is configured to,
in a situation that the random access preamble transmission power is determined to be bigger than the transmission power threshold, determine that the random access preamble received is the random access preamble sent from the relay.

## Patentansprüche

1. Direktzugriffsmethode in einem Mobilfunk-Kommunikationssystem für den Direktzugriff eines Relais, **dadurch gekennzeichnet, dass** die Methode Folgendes umfasst:
eine Basisstation, die dem Relais eine Relais-dedizierte Direktzugriff-Präambel zuordnet, wobei die Relais-dedizierte Direktzugriff-Präambel anzeigt, dass eine Zugriffpriorität des Relais' höher ist als jene eines gewöhnlichen Benutzer-Endgerätes (S502); und
wobei die Basisstation eine Direktzugriff-Präambel, die vom gewöhnlichen Benutzer-Endgerät gesendet wurde, und die vom Relais (S504) gesendete Relais-dedizierte Direktzugriff-Präambel empfängt, und wobei die Basisstation, nachdem sie den Empfang der Relais-dedizierten Direktzugriff-Präambel festgestellt hat, einen nicht konfliktbasierten Direktzugriff vorzugsweise für das Relais (S506) durchführt.

2. Methode nach Anspruch 1, **dadurch gekennzeichnet, dass** vor dem Schritt der Zuordnung der Relais-dedizierten Direktzugriff-Präambel durch die Basisstation zu dem Relais über einen dedizierten Kanal die Methode ferner Folgendes umfasst:
Teilen der nicht konfliktbasierten dedizierten Direktzugriff-Präambeln durch die Basisstation, um einen Abschnitt der nicht konfliktbasierten dedizierten Direktzugriff-Präambeln zu erhalten, der als Relais-dedizierte Direktzugriffpräambeln dient.

3. Methode nach Anspruch 2, **dadurch gekennzeichnet, dass**, nachdem die Basisstation festgestellt hat, dass ein empfangener Direktzugriff-Präambelcode die Relais-dedizierte Direktzugriff-Präambel ist, die Methode ferner Folgendes umfasst:
Festlegen der Zugriffpriorität des Relais als hoch durch die Basisstation.

4. Methode nach Anspruch 1, **dadurch gekennzeichnet, dass** die Methode vor dem Schritt des Empfangs der vom Relais gesendeten Relais-dedizierten Direktzugriff-Präambel durch die Basisstation ferner Folgendes umfasst:
Senden der Relais-dedizierten Direktzugriff-Präambel in einem vorgegebenen Direktzugriff-Zeitkanal eines Funkrahmens durch das Relais.

5. Direktzugriffmethode in einem Mobilfunk-Kommunikationssystem für den Direktzugriff eines Relais, **dadurch gekennzeichnet, dass** im Voraus vor einer Direktzugriffinitialisierung ein Sendeleistungsschwellenwert festgelegt wird, wobei der Sendeleistungsschwellenwert dazu konfiguriert ist, zu bestimmen, ob eine von einer Basisstation empfangene Direktzugriff-Präambel eine von einem Relais gesendete Direktzugriff-Präambel ist, und wobei die Methode nach der Direktzugriffinitialisierung ferner Folgendes umfasst:
Empfangen einer vom Relais in einem vorgegebenen Zeitkanal eines Funkrahmens (S702) gesendeten Direktzugriff-Präambel und eines Direktzugriff-Präambel-Sendeleistungsparameters; und
Festlegung durch die Basisstation, ob die empfangene Direktzugriff-Präambel die vom Relais gemäß dem empfangenen Direktzugriff-Präambel-Sendeleistungsparameter und dem Sendeleistungsschwellenwert gesendete Direktzugriff-Präambel ist, und wenn dies der Fall ist, Durchführung eines nicht konfliktbasierten Direktzugriffs vorzugsweise für das Relais (S704).

6. Methode nach Anspruch 5, **dadurch gekennzeichnet, dass** ein Verfahren der Basisstation zur Bestimmung, ob die empfangene Direktzugriff-Präambel die vom Relais gesendete Direktzugriff-Präambel ist, Folgendes umfasst:
Wenn festgestellt wird, dass der Direktzugriff-Präambel-Sendeleistungsparameter größer ist als der Sendeleistungsschwellenwert, dann erfolgt durch die Basisstation die Bestimmung, dass die empfangene Direktzugriff-Präambel die von dem Relais gesendete Direktzugriff-Präambel ist.

7. Methode nach Anspruch 6, **dadurch gekennzeichnet, dass**, nachdem die Basisstation festgestellt hat, dass der empfangene Direktzugriff-Präambelcode die vom Relais gesendete Direktzugriff-Präambel ist, die Methode ferner Folgendes umfasst:
Festlegen einer Zugriffpriorität des Relais als hoch durch die Basisstation.

8. Basisstation in einem Mobilfunk-Kommunikationssystem, **dadurch gekennzeichnet, dass** sie Folgendes umfasst:
ein Sendemodul (80), dazu konfiguriert, einem Relais eine Relais-dedizierte Direktzugriff-Präambel zuzuordnen, wobei die Relais-dedizierte Direktzugriff-Präambel eine Zugriffpriorität des Relais anzeigt, die höher ist als jene eines gewöhnlichen Benutzer-Endgeräts;
ein Empfangsmodul (82), dazu konfiguriert, die von dem Relais gesendete Relais-dedizierte Direktzugriff-Präambel und eine vom gewöhnlichen Benutzer-Endgerät gesendete Direktzugriff-Präambel zu empfangen;
ein Bestimmungsmodul (84), dazu konfiguriert, zu bestimmen, ob das Empfangsmodul die Relais-dedizierte Direktzugriff-Präambel empfängt; und
ein Direktzugriffsmodul (86), dazu konfiguriert, dass es in einer Situation, in der das Bestimmungsmodul feststellt, dass das Empfangsmodul die Relais-dedizierte Direktzugriff-Präambel empfängt, einen nicht konfliktbasierten Direktzugriff vorzugsweise für das Relais durchführt.

9. Basisstation nach Anspruch 8, **dadurch gekennzeichnet, dass** die Basisstation ferner Folgendes umfasst:
ein Teilungsmodul (88), dazu konfiguriert, nicht konfliktbasierte, dedizierte Direktzugriff-Präambeln zu teilen, um einen Abschnitt der nicht konfliktbasierten, dedizierten Direktzugriff-Präambeln zu erhalten, die als Relais-dedizierte Direktzugriff-Präambeln zu verwenden sind.

10. Basisstation in einem Mobilfunk-Kommunikationssystem, **dadurch gekennzeichnet, dass** sie Folgendes umfasst:
ein Einstellmodul (90), dazu konfiguriert, im Voraus einen Sendeleistungsschwellenwert eizustellen, wobei der Sendeleistungsschwellenwert dazu konfiguriert ist, zu bestimmen, ob eine von der Basisstation empfangene Direktzugriff-Präambel eine von einem Relais gesendete Direktzugriff-Präambel ist;
ein Empfangsmodul (92), das dazu konfiguriert ist, eine vom Relais in einem vorgegebenen Direktzugriff-Zeitkanal eines Funkrahmens gesendete Direktzugriff-Präambel und einen Direktzugriff-Präambel-Sendeleistungsparameter zu empfangen;
ein Bestimmungsmodul (94), das dazu konfiguriert ist, zu bestimmen, ob die empfangene Direktzugriff-Präambel die von dem Relais gemäß dem empfangenen Direktzugriff-Präambel-Sendeleistungsparameter und dem Sendeleistungsschwellenwert gesendete Direktzugriff-Präambel ist; und
ein Direktzugriffmodul (96), dazu konfiguriert, um in einer Situation, in der das Bestimmungsmodul feststellt, dass die empfangene Direktzugriff-Präambel die von dem Relais gesendete Direktzugriff-Präambel ist, einen nicht konfliktbasierten Direktzugriff vorzugsweise für das Relais durchzuführen.

11. Basisstation nach Anspruch 10, **dadurch gekennzeichnet, dass** das Bestimmungsmodul dazu konfiguriert ist,
in einer Situation, in dem die Direktzugriff-Präambel-Sendeleistung als größer als der Sendeleistungsschwellenwert bestimmt wird, zu bestimmen, dass die empfangene Direktzugriff-Präambel die von dem Relais gesendete Direktzugriff-Präambel ist.

## Revendications

1. Une méthode d'accès aléatoire dans un système de communication sans fil cellulaire pour un accès aléatoire d'un relais, **caractérisée en ce que** la méthode comprend :
Une station de base attribuant au relais un préambule d'accès aléatoire réservé au relais, où le préambule d'accès aléatoire réservé au relais indique une priorité d'accès du relais comme supérieure à celle d'un équipement utilisateur ordinaire (S502) ; et
La station de base recevant un préambule d'accès aléatoire envoyé à partir de l'équipement utilisateur ordinaire et le préambule d'accès aléatoire réservé au relais envoyé à partir du relais (S504), et la station de base réalisant, lorsque la détermination du préambule d'accès aléatoire réservé au relais est reçue, un accès aléatoire basé sur la non contention de préférence pour le relais (S506).

2. La méthode selon la revendication 1, **caractérisée en ce qu'**avant l'étape d'attribution au relais, par la station de base, du préambule d'accès aléatoire réservé au relais, via un canal consacré, la méthode comprend de plus :
La station de base divisant les préambules d'accès aléatoire réservé basé sur la non contention pour obtenir une portion des préambules d'accès aléatoire réservé basé sur la non contention à utiliser comme préambules d'accès aléatoire réservé au relais.

3. La méthode selon la revendication 2, **caractérisée en ce que**, après le fait que la détermination par la station de base d'un code de préambule d'accès aléatoire reçu soit le préambule d'accès aléatoire réservé au relais, la méthode comprend de plus :
Le réglage par la station de base de la priorité d'accès au relais comme étant de haut niveau.

4. La méthode selon la revendication 1, **caractérisée en ce qu'**avant l'étape de réception au relais, par la station de base, du préambule d'accès aléatoire réservé au relais envoyé à partir du relais, la méthode comprend de plus :
L'envoi par le relais du préambule d'accès aléatoire réservé au relais sur une fente de temps d'accès aléatoire prédéterminé d'un cadre radio.

5. Une méthode d'accès aléatoire dans un système de communication sans fil cellulaire pour un accès aléatoire d'un relais, **caractérisée en ce qu'**un seuil de puissance de transmission est réglé en avance par rapport à une initialisation d'accès aléatoire, où le seuil de puissance de transmission est configuré pour déterminer si un préambule d'accès aléatoire reçu par une station de base est un préambule d'accès aléatoire envoyé à partir d'un relais, et après l'initialisation d'accès aléatoire, la méthode comprend de plus :
La réception par la station de base d'un préambule d'accès aléatoire et un paramètre de puissance de transmission du préambule aléatoire envoyé à partir du relais sur une fente de temps d'accès aléatoire prédéterminée du cadre radio (S702) ; et
La détermination par la station de base si le préambule d'accès aléatoire reçu est le préambule d'accès aléatoire envoyé à partir du relais selon le paramètre de puissance de transmission du préambule d'accès aléatoire reçu et le seuil de puissance de transmission, et si cela est le cas, la réalisation d'un accès aléatoire basé sur la non contention de préférence pour le relais (S704).

6. La méthode selon la revendication 5, **caractérisée en ce qu'**un processus de la station de base déterminant le préambule d'accès aléatoire reçu qui est le préambule d'accès aléatoire envoyé à partir du relais, comprend :
La station de base, lors de la détermination du paramètre de puissance de transmission du préambule d'accès aléatoire est supérieure au seuil de puissance de transmission, déterminant que le préambule d'accès aléatoire reçu est le préambule d'accès aléatoire envoyé à partir du relais.

7. La méthode selon la revendication 6, **caractérisée en ce qu'**après le fait que la détermination par la station de base du code de préambule d'accès aléatoire reçu soit le préambule d'accès aléatoire envoyé à partir du relais, la méthode comprend de plus :
Le réglage par la station de base d'une priorité d'accès du relais comme un niveau élevé.

8. Une station de base dans un système de communication sans fil cellulaire, **caractérisée par** le fait de comprendre :
Un module d'envoi (80) configuré pour attribuer à un relais un préambule d'accès aléatoire réservé au relais, où le préambule d'accès aléatoire réservé au relais indique une priorité d'accès du relais comme étant supérieure à celle d'un équipement utilisateur ordinaire ;
Un module de réception (82), configuré pour recevoir le préambule d'accès aléatoire réservé au relais envoyé à partir du relais et un préambule d'accès aléatoire envoyé à partir de l'équipement utilisateur ordinaire ;
Un module de détermination (84) configuré pour déterminer si le module de réception reçoit le préambule d'accès aléatoire réservé au relais ; et
Un module d'accès aléatoire (86), configuré pour effectuer, dans une situation où le module de détermination détermine que le module de réception reçoit le préambule d'accès aléatoire réservé au relais, un accès aléatoire basé sur la non contention de préférence pour le relais.

9. La station de base selon la revendication 8, **caractérisée en ce que** la station de base comprend de plus :
Un module de division (88), configuré pour diviser des préambules d'accès aléatoire réservé basé sur la non contention pour obtenir une portion des préambules d'accès aléatoire réservé basé sur la non contention à utiliser comme préambules d'accès aléatoire réservé au relais.

10. Une station de base dans un système de communication sans fil cellulaire, **caractérisée par** le fait de comprendre :
Un module de réglage (90) configuré pour régler un seuil d'alimentation de transmission par avance, où le seuil d'alimentation de transmission est configuré pour déterminer si un préambule d'accès aléatoire reçu par la station de base est un préambule d'accès aléatoire envoyé à partir d'un relais ;
Un module de réception (92), configuré pour recevoir un préambule d'accès aléatoire et un paramètre de puissance de transmission du préambule d'accès aléatoire envoyé à partir du relais sur une fente de temps d'accès aléatoire prédéterminée d'un cadre radio ;
Un module de détermination (94) configuré pour déterminer si le préambule d'accès aléatoire reçu est le préambule d'accès aléatoire envoyé à partir du relai selon le paramètre de puissance de transmission du préambule d'accès aléatoire reçu et le seuil d'alimentation de transmission ; et
Un module d'accès aléatoire (96), configuré pour effectuer, dans une situation où le module de détermination détermine que le préambule d'accès aléatoire reçu est le préambule d'accès aléatoire envoyé à partir du relais, un accès aléatoire basé sur la non contention de préférence pour le relais.

11. La station de base selon la revendication 10, **caractérisée en ce que** le module de détermination est configuré pour,
dans une situation où l'alimentation de transmission du préambule d'accès aléatoire est déterminée pour être supérieure au seuil de puissance de transmission, déterminer que le préambule d'accès aléatoire reçu est le préambule d'accès aléatoire envoyé à partir du relais.
